Europäisches Patentamt

(19) European Patent Office

Office européen des brevets

(11) Publication number: **0 011 433**
**B1**

# EUROPEAN PATENT SPECIFICATION

(12)

(45) Date of publication of patent specification: **06.04.83**

(51) Int. Cl.³: **B 60 P 1/64, B 60 P 1/08**

(21) Application number: **79302480.3**

(22) Date of filing: **06.11.79**

(54) **Method for loading and unloading a lengthy object, such as a container, onto and off a vehicle and a device for carrying out the method.**

(30) Priority: **08.11.78 FI 783399**

(43) Date of publication of application:
**28.05.80 Bulletin 80/11**

(45) Publication of the grant of the patent:
**06.04.83 Bulletin 83/14**

(84) Designated Contracting States:
**BE DE FR GB NL SE**

(56) References cited:
**DE - A - 2 147 926**
**DE - B - 1 248 484**
**DE - C - 1 053 411**
**US - A - 3 303 950**
**US - A - 3 606 059**
**US - A - 3 987 919**
**US - A - 4 026 429**
**US - A - 4 051 968**

**LASTAUTO-OMNIBUS, No. 11, November 1972,
Stuttgart,
"Bogie Technik", pages 57, 58.**

(73) Proprietor: **Liljeström, Leo Lennart
4 Renvallinkuja
SF-00840 Helsinki 84 (FI)**

(72) Inventor: **Liljeström, Leo Lennart
4 Renvallinkuja
SF-00840 Helsinki 84 (FI)**

(74) Representative: **Topps, Ronald et al,
D. Young & Co 10 Staple Inn
London WC1V 7RD (GB)**

Courier Press, Leamington Spa, England

**Method for loading and unloading a lengthy object, such as a container,
onto and off a vehicle and a device for carrying out the method**

The present invention relates to a method for loading and unloading a lengthy object, such as a container, onto and off a trailer which is separable from a tractor vehicle by using a winch or the like mounted on the trailer, by means of which winch the object is pulled onto the chassis construction or equivalent of the trailer.

The present invention also relates to a vehicle for use in carrying out the method mentioned above, which vehicle has a trailer provided with winch means for pulling the said object onto the trailer for support.

A method is previously known by means of which a vehicle can be loaded by using a so-called transfer truckbed system. The system concerned comprises several loose truckbeds, which can be pulled onto the truck by means of a winch. Then it is necessary to raise the dumping mechanism to some extent in order that the truckbed should not be jerked very strongly when the centre of gravity of the truckbed is shifted onto the vehicle frame. The method concerned has also been applied to the loading of 6 metre so-called semi-long containers (20 ft.). This system is marketed under the trade name "Multilift". A drawback is, however, the steep loading angle, because of which the goods inside the container get into disorder. In order to avoid this, it is a known procedure to use cranes mounted on the vehicle. These, however, increase the overall length of the truckbed to an unreasonable extent.

A particularly serious problem consists of the loading and unloading of so-called long containers. By long containers are meant 12 metre long (40 ft.) containers, by means of which a major part of freight traffic is today run. Loading of these long containers onto a vehicle by using *e.g.* the method known under the trade name "Multilift" is impossible. This comes from the circumstance that the construction of the containers of the said type does not stand such handling.

For long containers, it is a known procedure to provide the vehicle with cranes mounted on the truckbed. This, however, results in the drawback that the overall length of the vehicle exceeds the overall length permitted by statute in most countries. Another drawback is that, since the cranes mounted on the truckbed increase the total weight of the vehicle considerably, the maximum permitted total weight permitted by the statute is easily exceeded. There are vehicles of the said type, *e.g.* in Finland, but they are only allowed to operate under exceptional permit within the area of the City of Helsinki.

Another method, the only one available at present, for loading and unloading long containers is the use of large fork-lift trucks and straddle carriers. These are, however, available only in few places. This results in the circumstance that a large container is usually not unloaded from the vehicle at the customer's premises, but the vehicle remains waiting until the load in the container has been unloaded. Of course, it is uneconomical to make expensive transport equipment stand unnecessarily during the unloading of the container. As a matter of fact, the whole idea of container transports then loses much of its meaningfulness.

Some of the drawbacks of the vehicle meant for the transport of the said long containers were already mentioned above. Owing to cranes mounted on the truckbed the overall-length and frequently also the total weight of the vehicles exceed those permitted by the statute. Under these circumstances, they cannot be used without particular permit. On the other hand, many systems of handling of containers mounted on vehicles are highly complicated and expensive.

On the other hand, if the vehicles have no handling equipment of the said type and are only resorted to external loading and unloading aid, the standing times of the vehicles become unreasonably long.

U.S.—A—3,987,91 discloses a trailer having support legs at its rear end which are operated to raise the rear end of the trailer enabling the rear bogie to be shifted forwardly towards the front wheels allowing the rear end of the trailer to then be lowered to the ground so that a load can be moved onto or off the trailer. This prior trailer is only suitable for loading and unloading short containers.

According to the present invention in one aspect, there is provided a method for loading and unloading a lengthy object, such as a long container, onto and off a trailer separable from a tractor vehicle, said trailer being provided with adjustable support legs located at the rear end of the trailer and with a bogie or a bogie-like axle system which is movable in the longitudinal direction of the trailer from the rear end to the front end of the trailer and a winch by which the object is pulled onto the vehicle, in which method during the loading and unloading the trailer is supported at the rear end by means of the support legs against the ground and the bogie or bogie-like axle system is shifted to the front end of the trailer and the rear end of the trailer is lowered onto the ground by means of the support legs and the container or object is, during loading pulled by the winch onto the trailer, and during unloading is moved off the trailer, characterized in that at the end of the movement of the shifting of the bogie or bogie-like axle system the bogie or bogie-like axle system is coupled to the tractor vehicle, e.g. by means of the trailer coupling and, at the same time the tractor vehicle is detached from the trailer and the tractor vehicle is pushed by means of the bogie or bogie-like axle system from underneath the trailer and bogie or bogie-like axle system supports the trailer front end.

According to the present invention in another aspect there is provided a vehicle for use in carrying out the method of the invention, comprising a tractor vehicle with a trailer, said trailer being provided with adjustable support legs placed at the rear end and with an axle system or bogie movable in the longitudinal direction of the trailer and with a winch device for pulling a container or object onto or off the trailer, characterized in that the axle system or bogie is provided with means for coupling the axle system or bogie to the tractor vehicle, preferably to its trailer coupling, and that the axle system or bogie is capable of being shifted far enough forwards so that it at the same time pushes the tractor vehicle away from underneath the trailer, whereby the front end of the trailer is supported by the axle system or bogie alone.

By means of the method in accordance with the invention, several advantages are obtained as compared with the known methods. The entire container unit can be delivered to the customer's premises and unloaded without the help of external unloading devices. The method in accordance with the invention is also advantageous from the point of view of the carrier, because the standing times of the vehicle remain considerably shorter than at present.

The vehicle in accordance with the invention also possesses several advantages. By means of this vehicle, the loading and unloading of long objects, e.g. 12 metre containers, can be performed without outside help practically anywhere. The dimensions of the vehicle can be brought within the limits required by the statute at the same time as the payload of the vehicle increases as compared with, e.g. vehicles of the known type provided with cranes.

An embodiment of the invention will now be described, by way of an example, with reference to the accompanying drawing, in which:—

Figure 1 is a diagrammatic side elevation of a vehicle in accordance with the present invention illustrating the vehicle parts in a first phase of the loading and unloading method in accordance with the present invention,

Figure 2 is a side elevation of the vehicle in accordance with the present invention showing the vehicle parts in a second phase of the unloading, and

Figure 3 is a side elevation of the vehicle in accordance with the present invention showing the vehicle parts in a third phase of the unloading.

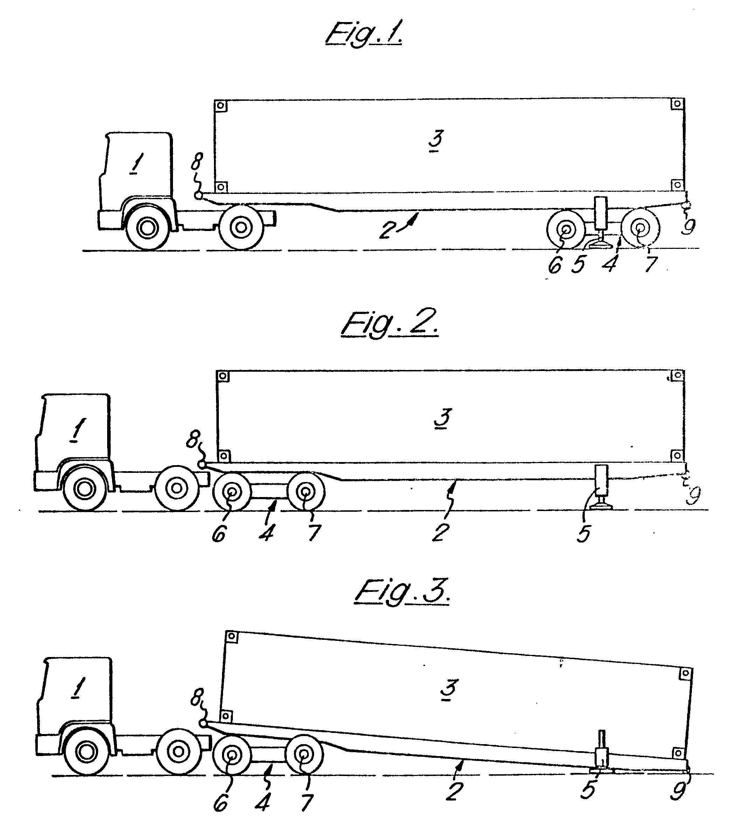

As shown in Figure 1, the vehicle in accordance with the invention comprises a tractor or towing vehicle 1 and a semi-trailer 2 coupled to same. The trailer 2 is loaded with a so-called long container 3. Hydraulic retractable support legs 5 are mounted between the wheels of the rear bogie 4 of the trailer 2. These legs 5 can be hydraulically raised and lowered so that the rear end of the trailer 2 can be supported on the ground by means of the legs 5.

The bogie 4 of the trailer 2 is so constructed that it can be shifted in the longitudinal direction of the trailer 2. For this purpose, appropriate guides or equivalent means are formed on or provided on the frame of the trailer 2. For effecting the shifting force of the rear bogie 4 there are hydraulic motors 6, 7 mounted in one or both of the axles. At the front part of the trailer 2 is mounted a winch device 8 whose purpose is to move the container 3 onto the trailer 2 when the trailer 2 is being loaded and, correspondingly, off the trailer 2 when the trailer 2 is being unloaded. Moreover, the trailer 2 is provided with means which automatically, when the bogie 4 moves and comes to a certain distance from the front part of the trailer 2, release the coupling between the tractor vehicle 1 and the trailer 2. Likewise, the bogie 4 of the trailer 2 is provided with a coupling by means of which it can be coupled to the trailer coupling mounted on the frame of the tractor vehicle 1. These means are not shown in the drawing, because they are generally known to the people skilled in the art and the invention is not concerned with these means. The rear corners of the trailer 2 may be provided with small wheels 9, which permit shifting of the corner of the trailer 2 in relation to the ground in certain steps of loading and unloading.

The method in accordance with the invention comprises the following steps. The figures in the drawing illustrate the unloading of a long container 3 from a semi-trailer 2, so that we shall first describe the unloading of the load 3 step-by-step. When a container 3 is to be unloaded from a vehicle the support legs 5 by hydraulic operation are lowered to the ground. In the drawing they are placed between the wheels, because there is space for the device 5 concerned in that position. In principle, the support legs 5 may be placed practically at any position whatsoever at the rear end of the trailer 2. When the support legs 5 are firmly on the ground the locking of the rear bogie 4 is released, by means of which locking the bogie 4 is fastened to the frame of the trailer. In the following step, which is illustrated in Figure 2, the rear bogie 4 is shifted, by means of the force of the hydraulic motors 6 and 7 placed in the axles, to a position underneath the front part of the trailer 2. Slightly before the bogie 4 runs against the tractor vehicle 1, and automatic device releases the coupling between the tractor vehicle and the trailer. Hereupon the bogie 4 that is moving forwards is locked to the trailer coupling of the tractor vehicle 1. When the bogie 4 still moves forwards as driven by the hydraulic motors 6, 7, it at the same time pushes the tractor vehicle 1 in front of it away from underneath the front part of the trailer 2.

In the next step, which is illustrated in Figure 3, the rear end of the trailer 2 is lowered to the ground by means of the support legs 5 with hydraulic operation. Now the container 3 can be shifted onto the ground by means of the winch 8. The shifting is made easier if the truckbed or the frame construction of the trailer 2 is provided with rolls or glide guides facilitating the gliding. At the same time it is advantageous that the trailer 2 moves forwards a distance equal to the length of the container 3. This is made easier if the rear end of the trailer 2 is provided with small wheels 9.

Hereupon the rear of the trailer 2 is again raised to the normal height by means of the hydraulic legs 5. Thereupon the rear bogie 4 can be shifted back into its rear position. At the initial stage of the shifting the rear bogie 4 is locked to the tractor vehicle and pulls the vehicle 1 along with it until the coupling means of the tractor vehicle 1 and the trailer 2 are one above the other. An automatic device takes care of the locking of the tractor vehicle 1 to the trailer 2 and likewise releases the bogie 4 from the trailer coupling of the tractor vehicle 1. Hereupon the hydraulic motors 6, 7 can shift the rear bogie 4 back to its rear position, where it is locked to the frame construction of the trailer 2. Finally, the support legs 5 are raised and the vehicle is ready to start driving.

Loading takes place almost in the same way. The vehicle is driven to the front of the container 3 to be loaded and in-line with the container 3. The support legs 5 are lowered and the rear bogie 4 is shifted forward in the manner described above by means of the hydraulic motors 6, 7 to a position underneath the front part of the trailer 2. After this the rear of the trailer 2 is lowered. Now the tractive means of the winch 8 are attached to the container 3, by means of which the container 3 is pulled onto the trailer 2. Hereupon the rear of the trailer 2 is raised by means of the support legs 5, and the rear bogie 4 is shifted to its rear position and is locked. In this way the vehicle is ready for operation.

The method in accordance with the invention is made particularly advantageous by the fact that the angle to which the container 3 must be raised is relatively small. Then the contents of the container do not get into disorder, nor are unreasonable requirements imposed on the construction of the container 3.

The invention has been described with reference to one advantageous embodiment of same. It is natural that the invention is not restricted to the described embodiment alone, as many other embodiments are also possible which fall within the scope of the appended claims. Thus, as the vehicle concerned, many other types of vehicle are also possible. The trailer may be coupled, *e.g.* to a tractor.

The device in accordance with the invention is, of course, not confined to the handling of containers alone, but it is usable in the handling of all lengthy large objects.

## Claims

1. A method for loading and unloading a lengthy object, such as a long container (3), onto and off a trailer separable from a tractor vehicle, said trailer being provided with adjustable support legs (5) located at the rear end of the trailer and with a bogie (4) of a bogie-like axle system which is movable in the longitudinal direction of the trailer from the rear end to the front end of the trailer and a winch by which the object is pulled onto the vehicle, in which method during the loading and unloading the trailer (2) is supported at the rear end by means of the support legs (5) against the ground and the bogie (4) or bogie-like axle system is shifted to the front end of the trailer (2) and the rear end of the trailer (2) is lowered onto the ground by means of the support legs (5) and the container (3) or object is, during loading pulled by the winch onto the trailer (2), and during unloading is moved off the trailer, characterized in that at the end of the movement of the shifting of the bogie (4) or bogie-like axle system the bogie (4) or bogie-like axle system is coupled to the tractor vehicle (1), e.g. by means of the trailer coupling and, at the same time the tractor vehicle (1) is detached from the trailer (2) and the tractor vehicle (1) is pushed by means of the bogie (4) or bogie-like axle system from underneath the trailer (2) and bogie (4) or bogie-like axle system supports the trailer front end.

2. A vehicle for use in carrying out the method claimed in claim 1, comprising a tractor vehicle (1) with a trailer (2), said trailer (2) being provided with adjustable support legs (5) placed at the rear end and with an axle system or bogie (4) movable in the longitudinal direction of the trailer (2) and with a winch device (8) for pulling a container (3) or object onto or off the trailer, characterized in that the axle system or bogie (4) is provided with means for coupling the axle system or bogie (4) to the tractor vehicle (1), preferably to its trailer coupling, and that the axle system or bogie (4) is capable of being shifted far enough forwards so that it at the same time pushes the tractor vehicle (1) away from underneath the trailer (2), whereby the front end of the trailer (2) is supported by the axle system or bogie (1) alone.

3. A vehicle as claimed in claim 2 further characterized in that the axle system or bogie (4) to be shifted and/or the trailer frame is provided with automatic means which, when the axle system or bogie (4) to be shifted arrives at a certain distance from the front end of the trailer, give the automatic system an impulse which disconnects the mechanical coupling between the tractor vehicle (1) and the trailer (2), whereupon the axle system or bogie (4), which is being shifted further, is coupled to the tractor vehicle (1) and pushes the vehicle (1) away from underneath the trailer (2).

## Revendications

1. Procédé pour charger et décharger d'un objet allongé, tel qu'un conteneur long (3), une remorque pouvant être séparée d'un véhicule de traction, ladite remorque comportant des pieds de support réglables (5) situées à l'extrémité arrière de la remorque, et un boggie (4), ou un système à essieux du type boggie, agencé pour pouvoir se déplacer dans la direction longitudinale de la remorque, de l'extrémité arrière vers l'extrémité avant de la remorque, et un treuil par lequel l'objet est tiré sur le véhicule, procédé dans lequel, pendant le chargement et le déchargement, la remorque (2) est supportée à son extrémité arrière au moyen des pieds de support (5) s'appuyant sur le sol, et le boggie (4) ou le système à essieux du type boggie est déplacé vers l'extrémité avant de la remorque (2), et l'extrémité arrière de la remorque (2) est abaissée sur le sol au moyen des pieds de support (5), et la conteneur (3) ou l'objet est, lors du chargement, tiré sur la remorque (2) par le treuil, et, lors du déchargement, retiré de la remorque, caractérisé en ce qu'à la fin du déplacement du boggie (4) ou du système à essieux du type boggie, le boggie (4) ou le système à essieux du type boggie est accouplé au véhicle de traction (1), par exemple au moyen de l'accouplement de la remorque, et, en même temps, le véhicule de traction est libéré de la remorque (2) et le véhicule de traction (1) est repoussé au moyen du boggie (4) ou du système à essieux du type boggie du dessous de la remorque (2) et le boggie (4) ou le système à essieux du type boggie supporte l'extrémité avant de la remorque.

2. Véhicule destiné à permettre la mise en oeuvre du procédé selon la revendication 1, comprenant un véhicule de traction (1) associé à une remorque (2), ladite remorque (2) comprenant des pieds de support réglables (5) disposés à son extrémité arrière, un système d'essieux ou boggie (4) déplaçable dans la direction longitudinale de la remorque (2), et un treuil (8) agencé pour tirer un conteneur (3) ou object sur la remorque ou l'en retirer, caractérisé en ce que le système d'essieux ou boggie (4) comporte des moyens pour accoupler le système d'essieux ou boggie (4) au véhicule de traction (1), de préférence à son accouplement de remorque, et que le système d'essieux ou boggie (4) peut être déplacé assez loin vers l'avant pour simultanément repousser le véhicule de traction (1) au dessous de la remorque (2), l'extrémité avant de la remorque (2) n'étant supportée que par le système d'essieux ou boggie (4).

3. Vehicule selon la revendication 2, caractérisé en outre en ce que le système d'essieux ou boggie (4) devant être déplacé et/ou le châssis de la remorque sont munis de moyens automatiques qui, lorsque le système d'essieux ou boggie (4) déplaçable arrive à une certaine distance de l'extrémité avant de la remorque, fournit au système automatique une impulsion qui déconnecte l'accouplement mécanique entre le véhicule de traction (1) et la remorque (2), le système d'essieux ou boggie (4), en poursuivant son déplacement, s'accouplant au véhicule de traction (1) et repoussant le véhicule (1) du dessous de la remorque (2).

## Patentansprüche

1. Verfahren zum Laden und Entladen eines langgestreckten Objecktes wie eines langen Containers (3) auf einen und von einem Anhänger, der von einem Zugfahrzeug abtrennbar ist, welcher Anhänger mit einstellbaren Stützbeinen (5) an seinem rückwärtigen Ende und mit einem in Längsrichtung des Anhängers vom rückwärtigen zum vorderen Ende des Anhängers bewegbaren Fahrwerk (4) oder einem fahrwerkartigen Achssystem ausgerüstet ist, und mit einer Winde, mittels der das Objekt auf das Fahrzeug gezogen wird, nach welchem Verfahren der Anhänger (2) während des Ladens und Entladens an seinem rückwärtigen Ende durch die Stützbeine (5) gegen den Boden abgestützt und das Fahrwerk (4) oder fahrwerkartige Achssystem zum vorderen Ende des Anhängers (2) verschoben und das rückwärtige Ende des Anhängers (2) mittels der Stützbeine (5) auf den Boden abgesenkt und der Container (3) oder das Objekt beim Laden durch die Winde auf den Anhänger (2) gezogen und beim Entladen von dem Anhänger herunterbewegt wird, dadurch gekennzeichnet, daß am Ende der Verschiebungsbewegung des Fahrwerks (4) oder des fahrwerkartigen Achssystems das Fahrwerk (4) bzw. das fahrwerkartige Achssystem an das Zugfahrzeug (1) zum Beispiel mittels der Anhängerkupplung angekuppelt wird, und daß zur selben Zeit das Zugfahrzeug (1) vom Anhänger (2) gelöst und das Zugfahrzeug (1) mittels des Fahrwerks bzw. des fahrwerkartigen Achssystems von unterhalb des Anhängers (2) verschoben wird und das Fahrwerk (4) bzw. das fahrwerkartige Achssystem das vordere Ende des Anhängers abstützt.

2. Fahrzeug zur Verwendung bei der Ausführung des Verfahrens nach Anspruch 1, mit einem Zugfahrzeug (1) und einem Anhänger (2), welcher Anhänger (2) mit einstellbaren Stützbeinen (5) an dem rückwärtigen Ende und mit einem in Längsrichtung des Anhängers (2) bewegbaren Achssystem oder Fahrwerk (4) ausgerüstet ist, und mit einer Winde (8), um einen Container (3) oder ein Objekt auf den oder von dem Anhänger zu ziehen, dadurch gekennzeichnet, daß das Achssystem oder das Fahrwerk (4) mit Einrichtungen zum Ankuppeln des Achssystems bzw. Fahrwerks (4) an das Zugfahrzeug (1), vorzugsweise an dessen Anhängerkupplung, versehen ist, und daß das Achssystem bzw. das Fahrwerk (4) weit genug nach vorn verschiebbar ist, so daß es zur selben Zeit das Fahrzeug (1) weg von unterhalb des Anhängers (2) verschiebt, wodurch das vordere Ende des Anhängers (2) nur durch das Achssystem bzw. das Fahrwerk (4) abgestützt ist.

3. Fahrzeug nach Anspruch 2, dadurch gekennzeichnet, daß das zu verschiebende Achssystem oder Fahrwerk (4) und/oder der Anhängerrahmen mit Automatikeinrichtungen versehen ist, die, wenn das zu verschiebende Achssystem bzw. Fahrwerk (4) an einem bestimmten Abstand von dem vorderen Ende des Anhängers ankommt, dem Automatiksystem einen Impuls geben, der die mechanische Kupplung zwischen dem Zugfahrzeug (1) und dem Anhänger (2) löst, woraufhin das Achssystem bzw. Fahrwerk (4), das weiter verschoben wird, an das Zugfahrzeug (1) angekuppelt wird und das Fahrzeug (1) weg von unterhalb das Anhängers (2) verschiebt.

## Fig.1.

## Fig.2.

## Fig.3.